# EUROPÄISCHE PATENTANMELDUNG

(11) **EP 4 528 948 A1**
(43) Veröffentlichungstag der Anmeldung: **26.03.2025**
(21) Anmeldenummer: 24187337.1
(22) Anmeldetag: 09.07.2024
(51) Int. Cl.: H02G 1/12, H01R 43/052, B23Q 3/06, H01R 43/28

(54) **SPANNVORRICHTUNG, INSBESONDERE FÜR EINEN WERKSTÜCKTRÄGER FÜR EIN KABEL**

(30) Priorität: 25.09.2023 DE 102023125839
(71) Anmelder: MD Elektronik GmbH, 84478 Waldkraiburg (DE)
(72) Erfinder: Strauß, Benedikt, 83559 Mittergars (DE)

(57) **Zusammenfassung**

Die Erfindung betrifft eine Spannvorrichtung (27), insbesondere für einen Werkstückträger für ein Kabel, wobei die Spannvorrichtung (27) aufweist:
- einen betätigbaren Aktor (1) mit zwei Aktorhälften (2),
- eine erste Spannbacke (4), die an der ersten Aktorhälfte (2) angeordnet ist, und eine zweite Spannbacke (5), die an der zweiten Aktorhälfte angeordnet ist, wobei bei Betätigung des Aktors (1) das Kabel abschnittsweise zwischen einer Aufnahmekontur (6) der ersten Spannbacke (4) und einer Aufnahmekontur (7) der zweiten Spannbacke (5) lösbar eingespannt werden kann,
- wobei mindestens eine Spannbacke (4; 5) zweiteilig ausgebildet ist und ein an der Aktorhälfte (2) befestigtes Basisteil (8, 8') und ein an dem Basisteil (8, 8') angeordnetes Wechselteil (9, 9`) aufweist,
- wobei das Wechselteil (9, 9`) einen auf dem Basisteil (8, 8') aufliegenden Auflageabschnitt (10) mit einer Auflagefläche (14) und einen an dem Basisteil (8, 8') anliegenden Anlageabschnitt (11) aufweist,
- wobei an dem Anlageabschnitt (11) an der auf die andere Spannbacke (5) weisenden Außenseite die Aufnahmekontur (6) ausgebildet ist,
- wobei an dem Anlageabschnitt (11) an einer von der anderen Spannbacke (5) fort weisenden Innenseite eine Anlagefläche (12) ausgebildet ist, mit der der Anlageabschnitt (11) an einer Anlagefläche (13) des Basisteils (8, 8') anliegt ist, und
- wobei die Anlagefläche (12) des Anlageabschnitts (11) des Wechselteils (9) mit der auf dem Basisteil (8, 8') aufliegenden Auflagefläche (14) des Wechselteils (9) einen spitzen Winkel einschließt.

Die Erfindung löst dabei die Aufgabe, für eine Spannvorrichtung, insbesondere auch für einen Werkstückträger mit einer Spannvorrichtung, eine Möglichkeit zum einfachen und schnellen Wechsel einer Spannbacke anzugeben.

Die Erfindung betrifft weiter einen Werkstückträger mit mindestens einer Spannvorrichtung.

## Beschreibung

### Technisches Gebiet

Die Erfindung betrifft eine Spannvorrichtung, insbesondere einen Werkstückträger für ein Kabel, sowie einen Werkstückträger mit einer derartigen Spannvorrichtung.

Aus der Praxis der Kabelbearbeitung ist es bekannt, ein Kabel, insbesondere ein abgemanteltes Kabelende, für die Bearbeitung des Kabels in einer Spannvorrichtung eingespannt und lösbar fixiert zu halten. Es ist insbesondere bekannt, das Kabel in einem Werkstückträger zu fixieren, derart, dass die beiden Enden des Kabels in jeweils einer Spannvorrichtung eingespannt und lösbar fixiert gehalten werden, wobei das Kabel U-förmig oder in mehrere überlagernde Wicklungen als sogenanntes Coil gelegt in dem Werkstückträger aufgenommen ist.

### Stand der Technik

Es ist bekannt, eine Spannvorrichtung für ein Kabel vorzusehen, die einen betätigbaren Aktor mit zwei Aktorhälften aufweist, wobei an der jeweiligen Aktorhälfte eine von zwei Spannbacken angeordnet ist. Bei Betätigung des Aktors fahren die Spannbacken aufeinander zu und klemmen einen Abschnitt des zu bearbeitenden Kabels zwischen den Spannbacken ein. Wird der Aktor erneut betätigt, wird die Spannung der Spannbacken aufgehoben oder reduziert, so dass das eingeklemmte Kabel gelöst und entnommen werden kann. Eine jede der beiden Spannbacken weist an einer auf die andere Spannbacke weisenden Seitenfläche eine Aufnahmekontur auf, die beispielsweise als kreisbogenförmige Längsnut ausgebildet ist, wobei in der Längsnut ein Abschnitt der Mantelfläche des Kabels geklemmt aufgenommen werden kann, wenn der Aktor betätigt ist, wenn also die Spannbacken relativ zu einander bewegt werden.

Die Aufnahmekontur der jeweiligen Spannbacke kann auf das geklemmt zu haltende Kabel abgestimmt sein, beispielsweise kann bei einer Längsnut mit kreisbogenförmigen Querschnittsprofil der Radius des Kreisbogens des Profils auf den Durchmesser der Mantelfläche des Kabels abgestimmt sein. Sind Kabel mit einem anderen Durchmesser zu bearbeiten, müsste die Spannbacke ausgetauscht werden.

Es ist bekannt, die Spannbacke mittels eines zusätzlichen Befestigungsmittels, beispielsweise einer Schraube, an der Aktorhälfte zu befestigen. Soll die Spannbacke ausgetauscht werden, ist ein zusätzliches Werkzeug erforderlich, beispielsweise ein Schraubenzieher, um die festgezogene Schraube zu lösen, wonach die Spannbacke gegen eine neue Spannbacke ausgetauscht werden kann. Die neue Spannbacke muss dann wiederum mit dem Werkzeug, beispielsweise dem Schraubenzieher, erneut festgelegt werden.

In einer automatisierten Kabelverarbeitungsanlage werden viele Kabel gleichzeitig bearbeitet, wobei jedes Kabel in einem Werkstückträger eingespannt sein kann, der wiederum zwei Spannvorrichtungen mit jeweils zwei Spannbacken aufweisen kann. Ein Austauschen sämtlicher Spannbacken unter Nutzung eines zusätzlichen Werkzeugs, um ein Befestigungsmittel wie eine Schraube zu lösen und dann später, nach Austausch der Spannbacke, wieder festzuziehen, kann aufwendig sein, zumal das Lösen und erneute Anziehen des Befestigungsmittels einen menschlichen Bediener erforderlich macht und nur aufwendig zu automatisieren ist.

DE 10 2004 061 047 B3 beschreibt mit Bezug auf Fig. 5 eine Spannvorrichtung mit zwei Klemmbacken, die ein zu bearbeitendes Kabelende umgreifen, wobei die jeweilige Klemmbacke mittels einer Schraube an einer von zwei Aktorhälften befestigt ist. Ist eine Klemmbacke auszutauschen, müsste die mindestens eine Schraube unter Verwendung eines zusätzlichen Werkzeugs gelöst und, nach Austausch der Klemmbacke, erneut angezogen werden, um die neue Klemmbacke zu befestigen.

EP 0 993 085 A2 beschreibt eine Spannvorrichtung zur Aufnahme eines Kabels mit zwei aufeinander zu schwenkbaren Klemmbacken, wobei die jeweilige Klemmbacke abschnittsweise eine kreisbogenförmige Querschnittskontur aufweist, die das Kabel entlang eines Umfangsabschnitts aufnimmt. Die Schwenkachse der jeweiligen Klemmbacke ist im Wesentlichen parallel zu der Längsrichtung des Kabels ausgerichtet. Soll eine Klemmbacke ausgetauscht werden, muss die Klemmbacke von dem Schwenkarm entfernt und eine neue Klemmbacke auf den Schwenkarm montiert werden. Möglich wäre auch der Austausch des Schwenkarms mit der daran befestigten Klemmbacke. In beiden Fälle wäre ein Werkzeug erforderlich, was den Austausch aufwendig macht.

US 2022/0305621 A1 beschreibt einen feststehenden Schraubstock zum Einspannen eines Werkstücks, das im Wesentlichen ebene Seitenflächen aufweist. Der Schraubstock weist zwei Backen auf, die jeweils auf einem Trägerblock befestigt sind, wobei der jeweilige Trägerblock durch einen Gewindeabschnitt eine Gewinde-Antriebsspindel durchsetzt ist. Die jeweilige Backe ist an dem jeweiligen Trägerblock durch eine Nut-Feder-Führung gehalten, wozu jeweils aufeinander annähernd senkrecht stehende Flächenabschnitte der Backe und des Trägerblocks zusammenwirken. Ein Austauschen der Backe des feststehenden Schraubstocks ist nur aufwendig möglich, wenn die Gewindeabschnitte gelöst werden, und für die übliche Funktion des Schraubstocks allenfalls im Reparaturfall vorgesehen.

### Beschreibung der Erfindung

Es ist eine Aufgabe der Erfindung, für eine Spannvorrichtung, insbesondere auch für einen Werkstückträger mit einer Spannvorrichtung, eine Möglichkeit zum einfachen und schnellen Wechsel einer Spannbacke anzugeben.

Diese Aufgabe wird erfindungsgemäß gelöst durch eine Spannvorrichtung, insbesondere für einen Werkstückträger für ein Kabel, wobei die Spannvorrichtung aufweist:
- einen betätigbaren Aktor mit zwei Aktorhälften,
- eine erste Spannbacke, die an der ersten Aktorhälfte angeordnet ist, und eine zweite Spannbacke, die an der zweiten Aktorhälfte angeordnet ist, wobei bei Betätigung des Aktors das Kabel abschnittsweise zwischen einer Aufnahmekontur der ersten Spannbacke und einer Aufnahmekontur der zweiten Spannbacke lösbar eingespannt werden kann,
- wobei mindestens eine Spannbacke zweiteilig ausgebildet ist und ein an der Aktorhälfte befestigtes Basisteil und ein an dem Basisteil angeordnetes Wechselteil aufweist,
- wobei das Wechselteil einen auf dem Basisteil aufliegenden Auflageabschnitt mit einer Auflagefläche und einen an dem Basisteil anliegenden Anlageabschnitt aufweist,
- wobei an dem Anlageabschnitt an der auf die andere Spannbacke weisenden Außenseite die Aufnahmekontur ausgebildet ist,
- wobei an dem Anlageabschnitt an einer von der anderen Spannbacke fort weisenden Innenseite eine Anlagefläche ausgebildet ist, mit der der Anlageabschnitt an einer Anlagefläche des Basisteils anliegt ist, und
- wobei die Anlagefläche des Anlageabschnitts des Wechselteils mit der auf dem Basisteil aufliegenden Auflagefläche des Wechselteils einen spitzen Winkel einschließt.

Die zweiteilige Ausbildung der mindestens einen Spannbacke durch ein Basisteil und ein Wechselteil ermöglicht den Austausch nur des Wechselteils, an dem die Aufnahmekontur ausgebildet ist, um die Spannbacke an ein Kabel beispielsweise mit abweichenden Durchmesser anzupassen. Das Wechselteil liegt auf dem Basisteil abschnittsweise auf bzw. an und lässt sich ohne Zuhilfenahme von Werkzeugen einfach austauschen.

Der auf dem Basisteil lose aufliegende Auflageabschnitt des Wechselteils sowie der an dem Basisteil lose anliegende Anlageabschnitt des Wechselteils ermöglichen einen Austausch des Wechselteils, ohne zusätzliche Befestigungsmittel lösen und wieder zu befestigen zu müssen. Insbesondere wird ein werkzeugloses Austauschen des Wechselteils in Bezug auf das an der Aktorhälfte befestigte Basisteil ermöglicht.

Die Ausbildung des spitzen Winkels zwischen der Anlagefläche des Anlageabschnitts des Wechselteils und der auf dem Basisteil aufliegenden Auflagefläche des Wechselteils bilden ein Führungspaar von Keilflächen aus, das, wenn bei Betätigung des Aktors der in der Aufnahmekontur aufgenommene Kabelabschnitt in Richtung der zweiteilig ausgebildeten Spannbacke gedrückt wird, bewirkt, dass der Auflageabschnitt auf das Basisteil gedrückt wird. Diese Wirkung tritt insbesondere dann ein, wenn der Winkel deutlich geringer als 90° ist und deutlich mehr als 0° beträgt.

Die der Erfindung zugrunde liegende Aufgabe wird insbesondere auch für einen Werkstückträger, speziell für einen Werkstückträger für ein Kabel, wobei der Werkstückträger für die geklemmte Aufnahme der beiden Kabelenden eines Kabels ausgebildet ist, gelöst, sofern der Werkstückträger eine erfindungsgemäße Spannvorrichtung aufweist bzw. als Bestandteil umfasst, insbesondere auch, wenn bei dem Werkstückträger jede der beiden Spannvorrichtungen für insbesondere jedes der beiden Kabelenden erfindungsgemäß ausgebildet ist.

Vorzugsweise ist vorgesehen, dass wobei der spitze Winkel ca. 30° bis ca. 75°, insbesondere ca. 65°, beträgt. Dieser spitze Winkel ist ebenfalls zwischen dem Flächenabschnitt des Basisteils, auf dem der Auflageabschnitt des Wechselteils aufliegt, und der Anlagefläche des Basisteils, an der die Innenseite des Anlageabschnitts des Wechselteils anliegt, ausgebildet, so dass das Basisteil und das Wechselteil an zwei zueinander um den spitzen Winkel verkippten Kontaktflächenpaaren flächig in Kontakt stehen, wenn der Aktor betätigt und dabei das Kabel lösbar eingespannt ist.

Vorzugsweise ist insbesondere für das Wechselteil vorgesehen, dass das Wechselteil zwei gegenüberliegende Wangenabschnitte aufweist, wobei der jeweilige Wangenabschnitt nahe an einer Seitenkante des Basisteils anliegt. Die beiden Wangenteile unterdrücken eine unerwünschte Bewegung des Wechselteils relativ zu dem Basisteil, wenn der Aktor betätigt wird und eine Kraft auf die mindestens eine zweiteilig ausgebildete Spannbacke ausgeübt wird.

Vorzugsweise ist weiter vorgesehen, dass das Wechselteil als einstückiges metallisches Formteil ausgebildet ist. Dieses Formteil wird an das an der Aktorhälfte befestigte Basisteil aufgelegt bzw. angelegt bzw. kann von dem Basisteil wieder abgenommen werden, ohne dass Werkzeuge erforderlich sind.

Vorzugsweise ist vorgesehen, dass das Wechselteil aus einem magnetisch leitfähigen Material ausgebildet ist, und wobei in dem Basisteil eine permanente Magnetisierung vorgesehen ist, deren magnetischer Kreis durch das magnetisch leitfähige Material des Wechselteils geschlossen wird. Die permanente Magnetisierung in dem Basisteil kann durch einen Permanentmagneten bereitgestellt werden, der in dem Basisteil aufgenommen ist. Der magnetische Kreis reduziert eine unerwünschte Relativbewegung des Wechselteils in Bezug zu dem Basisteil in einer Richtung parallel zu dem Kabel bzw. in einer Richtung weg von der gegenüberliegenden Spannbacke.

In Hinblick auf die Reduzierung einer unerwünschten Relativbewegung des Wechselteils zu dem Basisteil in Richtung auf die gegenüberliegende Spannbacke kann vorzugsweise vorgesehen sein, dass das Wechselteil an einem dem Anlageabschnitt gegenüberliegenden Endabschnitt einen Halteabschnitt aufweist, der eine Endkante des Basisteils abschnittsweise übergreift.

Vorzugsweise ist vorgesehen, dass das Basisteil einen Befestigungsabschnitt zur Befestigung an der Aktorhälfte aufweist, und wobei der Befestigungsabschnitt außerhalb des von dem Wechselteil abgedeckten Abschnitts des Basisteils angeordnet ist. Das Basisteil kann insbesondere L-förmig ausgebildet sein, wobei ein Schenkel des L von dem Wechselteil überdeckt ist, also mit dem Wechselteil eine möglichst große, ununterbrochene Kontaktfläche ausbildet, und der andere Schenkel des L als Befestigungsabschnitt des Basisteils ausgebildet ist, so dass im Bereich des Befestigungsabschnitts das Basisteil beispielsweise mittels einer Schraubverbindung an der Aktorhälfte befestigt ist.

In Hinblick auf eine möglichst große gemeinsame Kontaktfläche zwischen dem Auflageabschnitt des Wechselteils und dem Basisteil ist vorzugsweise vorgesehen, dass das Wechselteil im Bereich des Übergangs von der Auflagefläche des Auflageabschnitts zu der Anlagefläche des Anlageabschnitts eine Hinterschneidung aufweist, die sich im Wesentlichen parallel zu der Aufnahmekontur erstreckt. In die Hinterschneidung kann eine Kante des im Querschnitt mit dem spitzen Winkel ausgebildeten Basisteils eingreifen.

Vorzugsweise ist weiter hinsichtlich der beiden Spannbacken der Spannvorrichtung vorgesehen, dass jede der beiden Spannbacken zweiteilig mit jeweils einem Basisteil und jeweils einem Wechselteil ausgebildet ist, wobei das Basisteil bzw. das Wechselteil für die jeweilige der beiden Spannbacken wie oben für mindestens eine der beiden Spannbacken beschrieben ausgebildet ist.

Weitere Vorteile und Merkmale der Erfindung ergeben sich aus den abhängigen Ansprüchen sowie aus der nachfolgenden Beschreibung mindestens eines Ausführungsbeispiels.

Die Erfindung wird im Folgenden unter Bezugnahme auf die anliegenden Zeichnungen näher beschrieben und erläutert.
- Fig. 1: zeigt eine teilweise geschnittene Ansicht eines Ausführungsbeispiels einer erfindungsgemäßen Spannvorrichtung,
- Fig. 2: zeigt eine teilweise geschnittene Ansicht der Spannvorrichtung aus Fig. 1, aus einer abweichenden Perspektive,
- Fig. 3: zeigt eine perspektivische Ansicht der Spannvorrichtung aus Fig. 1 und Fig. 2 in einer unvollständig montierten Stellung, und
- Fig. 4: zeigt eine perspektivische Ansicht des Wechselteils der Spannvorrichtung aus Fig. 1 bis Fig. 3.

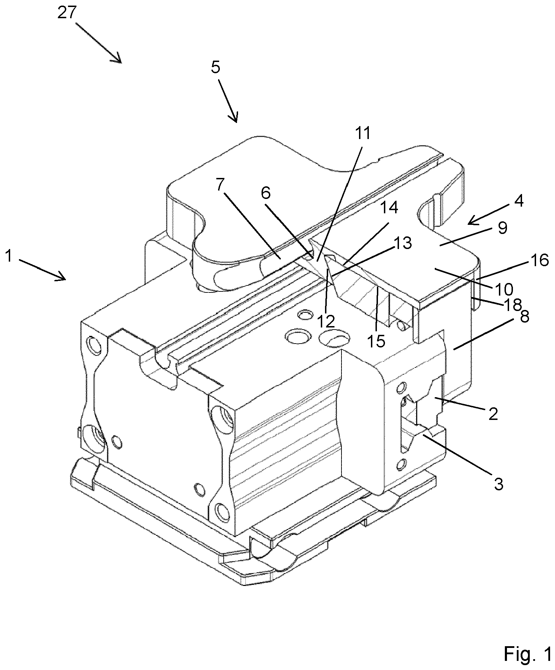

Fig. 1 zeigt ein Ausführungsbeispiel einer erfindungsgemäßen Spannvorrichtung für ein Kabel, in einer teilweise geschnittenen perspektivischen Ansicht aus einer ersten Blickrichtung.

Die Spannvorrichtung umfasst einen Aktor 1 mit einer ersten Aktorhälfte 2 und einer zweiten Aktorhälfte. Die jeweilige Aktorhälfte ist in einer Führung in dem Aktorgehäuse verschieblich geführt, wobei die erste Aktorhälfte 2 in der Führung 3 in dem Aktorgehäuse verschieblich angeordnet ist. Die zweite Aktorhälfte ist in der Darstellung von Fig. 1 nicht erkennbar. Die Spannvorrichtung weist weiter eine erste Spannbacke 4 auf, die an der ersten Aktorhälfte 2 angeordnet ist, und eine zweite Spannbacke 5, die an der zweiten Aktorhälfte angeordnet ist. Der Aktor 1 ist ausgebildet, bei Betätigung ein bildlich nicht dargestelltes Kabel abschnittsweise zwischen einer Aufnahmekontur 6 der ersten Spannbacke 4 und einer Aufnahmekontur 7 der zweiten Spannbacke 5 einzuspannen, und zwar lösbar einzuspannen, wenn die Betätigung des Aktors 1 aufgehoben wird, so dass das Kabel freigegeben wird und entnommen werden kann.

Der Aktor 1 ist insbesondere als pneumatischer Aktor ausgebildet, bei dessen Betätigung die beiden Aktorhälften 2 aufeinander zu bewegt werden und das Kabel abschnittsweise zwischen den Aktorhälften 2 einklemmen. Wird die Betätigung des pneumatischen Aktors 1 aufgehoben, insbesondere der pneumatische Aktor 1 drucklos gestellt, bleiben die beiden Aktorhälften 2 aufeinander zu verspannt unter der Vorspannung einer mechanischen Feder. Entgegen der geringen Vorspannung der mechanischen Feder lässt sich dann das abschnittweise eingespannte Kabel entnehmen, wenn die Spannbacken 4, 5 voneinander weg gedrückt werden, beispielsweise dann, wenn der Aktor 1 wieder pneumatisch beaufschlagt wird.

Aus Fig. 1 ist ersichtlich, dass mindestens eine Spannbacke, nämlich mindestens die erste Spannbacke 4, zweiteilig ausgebildet ist, also zwei voneinander unabhängige Bestandteile aufweist. Die erste Spannbacke 4 weist ein an der ersten Aktorhälfte 2 befestigtes Basisteil 8 und ein auf dem Basisteil 8 angeordnetes, nämlich auf dem Basisteil 8 aufliegendes Wechselteil 9 auf. Das Wechselteil 9 ist von dem Basisteil 8 abnehmbar und austauschbar ausgestaltet.

Das Wechselteil 9 weist einen auf dem Basisteil 8 aufliegenden Auflageabschnitt 10 auf mit einer Auflagefläche 14, mit der der Auflageabschnitt 10 auf dem Basisteil 8 aufliegt. Das Wechselteil 9 weist weiter einen an dem Basisteil 8 anliegenden Anlageabschnitt 11 auf.

An dem Anlageabschnitt 11 des Wechselteils 9 ist auf der auf die andere, zweite Spannbacke 5 weisenden Außenseite die Aufnahmekontur 6 ausgebildet, wobei in der Aufnahmekontur 6 abschnittweise entlang der Längsrichtung ein Abschnitt des Umfangs des Kabels annähernd formschlüssig aufnehmbar ist.

An dem Anlageabschnitt 11 des Wechselteils 9 ist auf der der Außenseite gegenüberliegenden, von der anderen, zweiten Spannbacke 5 fort weisenden Innenseite eine Anlagefläche 12 ausgebildet. Mit der Anlagefläche 12 liegt der Anlageabschnitt 11 des Wechselteils 9 in der Darstellung von Fig. 1 seitlich an einer Anlagefläche 13 des Basisteils 8 an.

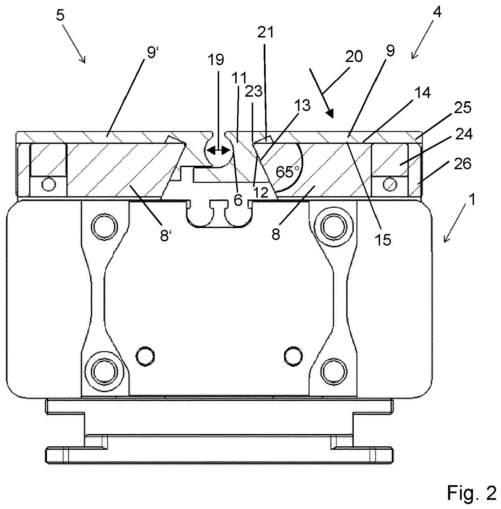

Die Anlagefläche 12 des Anlageabschnitts 11 des Wechselteils 9 schließt mit der auf dem Basisteil 8 aufliegenden Auflagefläche 14 des Wechselteils 9 einen spitzen Winkel ein, also einen Winkel, der deutlich geringer als 90° und deutlich größer als 0° ist. In dem dargestellten Ausführungsbeispiel beträgt der spitze Winkel ca. 30° bis ca. 75°, insbesondere ca. 65° (Fig. 2).

Entsprechend schließt auch die Anlagefläche 13 des Basisteils 8 mit der Auflagefläche 15 des Basisteils 8, auf der die Auflagefläche 14 des Auflageabschnitts 10 des Wechselteils 9 aufliegt, den gleichen spitzen Winkel ein.

Die miteinander zusammenwirkenden Auflageflächen 14, 15 des Wechselteils 9 bzw. des Basisteils 8 sind jeweils eben ausgebildet. Auch die miteinander zusammenwirkenden Anlageflächen 12, 13 des Basisteils 8 bzw. des Wechselteils 9 sind eben ausgebildet und erstrecken sich in der Darstellung von Fig. 1 in die Papierebene hinein. Dabei ist die Anlagefläche 12, 13 in Bezug auf die jeweils korrespondierende Auflagefläche 14, 15 um den spitzen Winkel von ca. 30° bis ca. 75°, insbesondere ca. 65°, geneigt.

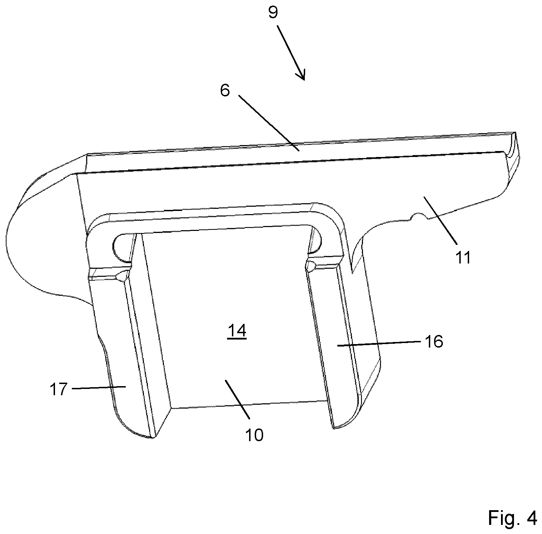

Das Wechselteil 9 weist zwei gegenüberliegenden Wangenabschnitte 16, 17 auf, von denen einer in Fig. 1 mit dem Bezugszeichen ,16` ausgewiesen ist, und die beide in der perspektivischen Darstellung von Fig. 4 erkennbar sind. Der jeweilige Wangenabschnitt, insbesondere der Wangenabschnitt 16 in Fig. 1, liegt nahe einer Seitenkante 18 des Basisteils 8 an, lässt also zu der Fläche der Seitenkante 18 einen nur geringen Luftspalt. Die beiden Wangenabschnitte verhindern ein Verschieben des Wechselteils 9 in Richtung der Erstreckung des Kabels bzw. in Richtung der Erstreckung der Aufnahmekontur 6.

Fig. 2 zeigt die erste Spannbacke 4 aus Fig. 1 in einer Schnittdarstellung, aus einer Blickrichtung entlang der Längserstreckung des bildlich nicht dargestellten Kabels.

Wäre ein Kabel zwischen den Spannbacken 4, 5 eingespannt und würde der Aktor 1 betätigt, übt das Kabel auf die erste Spannbacke 4 eine Kraft gemäß dem rechten Teil-Pfeil des Doppelpfeils 19 auf die Aufnahmekontur 6 des Wechselteils 9 aus. Bei dieser Krafteinleitung wirken die beiden Anlageflächen 12, 13 als Keilflächenpaarung zusammen, so dass eine gedachte resultierende Gegenkraft nach dem Pfeil 20 entsteht, also eine resultierende Kraft mit einer hohen Kraftkomponente senkrecht zu den beiden Auflageflächen 14, 15 mit der Wirkung, dass das Wechselteil 9 auf das Basisteil 8 gedrückt wird und an dem Basisteil 8 zusätzlich fixiert wird. Die Richtung des Pfeils 20 entspricht, in Wesentlichen parallele versetzt, der Richtung der beiden Anlageflächen 12, 13.

Fig. 2 ist für die zweite Spannbacke 5 weiter zu entnehmen, dass die zweite Spannbacke 5 ebenfalls zweiteilig ausgebildet ist, mit einem Basisteil 8` und einem Wechselteil 9`. Es ist insbesondere erkennbar, dass jede der beiden Spannbacken 4, 5 zweiteilig mit jeweils einem Basisteil 8, 8` und jeweils einem Wechselteil 9, 9` ausgebildet ist, mit dem Verständnis, das die bisherige Beschreibung sowie die folgende Beschreibung der ersten Spannbacke 4 mit dem Basisteil 8 und dem Wechselteil 9 sinngemäß auch für die andere, zweite Spannbacke 5 gilt.

Für die zweite Spannbacke 5 gilt damit auch, wie in Fig. 2 für die erste Spannbacke 4 ersichtlich, dass das Wechselteil 9 der ersten Spannbacke 4 im Bereich des Übergangs von der Auflagefläche 14 des Auflageabschnitts 10 zu der Anlagefläche 12 des Anlageabschnitts 11 eine Hinterschneidung 21 aufweist, die sich im Wesentlichen parallel zu der Aufnahmekontur 6 erstreckt. Es ist weiter erkennbar, dass der Anlageabschnitt 11 des Wechselteils 9 in Bezug auf den Auflageabschnitt 10 im Wesentlichen senkrecht abgestellt ausgebildet ist, derart, dass der Anlageabschnitt 11 zwischen dem Basisteil 8 und der gegenüberliegenden Spannbacke 5 angeordnet ist.

Wie oben erläutert, ist vorgesehen, dass Wechselteil 9 ohne weitere zusätzliche Befestigungsmittel an dem Basisteil 8 im Bereich des Auflageabschnitts 10 aufliegend und im Bereich des Anlageabschnitts 11 anliegend angeordnet und gehalten ist, insbesondere lässt sich das Wechselteil 9 entfernen und austauschen, ohne irgendwelche Befestigungsmittel wie Schrauben oder dergleichen lösen und nach Austausch des Wechselteils 9 wieder anziehen zu müssen.

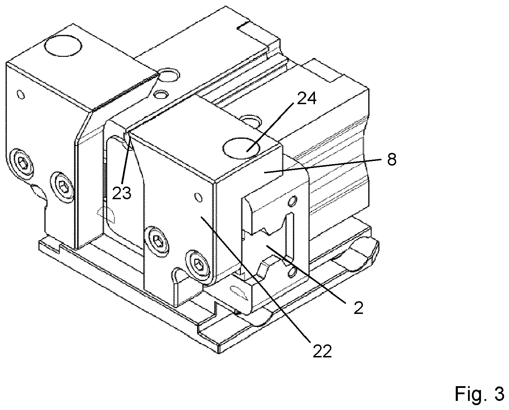

Fig. 3 zeigt eine perspektivische Ansicht auf die Spannvorrichtung, bei der die beiden Wechselteils 9, 9` aus Fig. 1 und 2 abgenommen sind, so dass nur die jeweilige Aktorhälfte, insbesondere die erste Aktorhälfte 2 sowie das an der ersten Aktorhälfte 2 befestigte Basisteil 8 erkennbar sind. Es ist ersichtlich, dass das Basisteil 8 im Wesentlichen L-förmig ausgebildet ist, wobei auf einem der Schenkel des L das Wechselteil aufliegt und auf dem anderen Schenkel des L zur Befestigung an der Aktorhälfte 2 dient. Mit diesem anderen Schenkel des L weist das Basisteil 8 einen Befestigungsabschnitt 22 zur Befestigung des Basisteils 8 an der ersten Aktorhälfte 2 auf, insbesondere sind zwei Befestigungsschrauben zur dauernden Fixierung des Basisteils 8 an der ersten Aktorhälfte 2 erkennbar. Dieser Befestigungsabschnitt 22 ist, wie ein Vergleich mit der Darstellung in Fig. 1 zeigt, außerhalb des von dem Wechselteil 9 abgedeckten Abschnitts des Basisteils 8 angeordnet ist.

Fig. 4 zeigt eine perspektivische Ansicht des Wechselteils 9 aus Fig. 1 und 2. Das Wechselteil 9 ist als austauschbares Teil der Spannvorrichtung ausgebildet und kann gegen ein anderes Wechselteil ausgetauscht werden, das beispielsweise ein anderes Profil der Aufnahmekontur 6 aufweist, beispielsweise dann, wenn Kabel mit einem anderen Durchmesser oder Umfangsprofil in der Spannvorrichtung aufgenommen werden müssen. Auch kann die Längserstreckung der Aufnahmekontur 6 bei unterschiedlichen Wechselteilen voneinander abweichen. Fig. 4 zeigt insbesondere eine Draufsicht auf die ebene Auflagefläche 14 des Auflageabschnitts 10 des Wechselteils 9.

Fig. 4 lässt erkennen, dass das Wechselteil 9 als einstückiges Formteil, insbesondere als Formteil aus einem Metall, ausgebildet ist. Das Wechselteil 9 ist insbesondere als Frästeil ausgebildet aus einem gehärteten Stahl, speziell aus einem insbesondere plasmanitrierten Nitrierstahl. Auch das Basisteil 8 aus Fig. 1 bis 3 ist als einstückiges, im Wesentlichen L-förmiges Formteil ausgebildet, insbesondere ebenfalls aus einem gehärteten Stahl, speziell aus einem insbesondere plasmanitrierten Nitrierstahl.

Für das Wechselteil 9 ist aus Fig. 4 ersichtlich, dass das Korpus des Wechselteils 9 durchgehend ausgebildet ist, also gerade keinen das Korpus von der Außenseite zu der Innenseite durchsetzenden Durchbruch aufweist, durch den hindurch ein Befestigungsmittel wie eine Schraube hindurchgeführt werden müsste.

Für eine Montage des Wechselteils 9 an dem Basisteil 8 ist vorgesehen, das Wechselteil 9 aus Fig. 4 bereitzustellen und so an das auf der ersten Aktorhälfte 2 dauerhaft fixierte Basisteil 8 aus Fig. 3 anzuordnen, dass das Basisteil 8 zwischen den Wangenabschnitten 16, 17 des Wechselteils 9 aufgenommen ist, derart, dass der Anlageabschnitt 11 des Wechselteils 9 eine Kante 23 so übergreift, dass die Anlagefläche 12 des Anlageabschnitts 11 des Wechselteils 9 an der Anlagefläche 13 des Basisteils 8 seitlich anliegt (Fig. 1, 2). In dieser Position wäre noch eine leichte Verschiebbarkeit des Wechselteils 9 gegenüber dem Basisteil 8 hin auf die gegenüberliegende Spannbacke gegeben (in der Darstellung von Fig. 2 von links nach rechts bzw. von rechts nach links).

Wird der Aktor 1 betätigt und die erste Spannbacke 4 auf die zweite Spannbacke 5 bewegt, so dass zwischen den Spannbacken 4, 5 ein Kabel eingeklemmt wird, wird, wie anhand von Fig. 2 erläutert, das Wechselteil 9 auf das Basisteil 8 gedrückt, so dass eine lösbare zusätzliche Fixierung des Wechselteils 9 an dem Basisteil 8 auftritt. Wird der Aktor drucklos gestellt, kann das Wechselteil 9 abgenommen werden, indem der Anlageabschnitt 11 des Wechselteils 9 über die Kante 23 des Basisteils 8 angehoben und das Wechselteil 9 insgesamt von dem Basisteil 8 abgenommen wird. Für dieses Abnehmen kann es erforderlich sein, die beiden Spannbacken 4, 5 leicht voneinander weg zu drücken, beispielsweise durch ein entsprechendes Betätigen des pneumatischen Aktors 1.

Die Verschiebbarkeit des Wechselteils 9 gegenüber dem Basisteil 8, solange kein Kabel zwischen den Spannbacken 4, 5 eingeklemmt ist, kann beispielsweise dadurch reduziert werden, dass das Wechselteil 9 aus einem magnetisch leitfähigen Material ausgebildet ist, und dass in dem Basisteil 8 eine permanente Magnetisierung vorgesehen ist, deren magnetischer Kreis durch das magnetisch leitfähige Material des Wechselteils 9 geschlossen wird. Bei dem dargestellten Ausführungsbeispiel sind sowohl das Basisteil 8 als auch das Wechselteil 9 aus einem magnetisch leitfähigen Material ausgebildet, nämlich dem gehärteten Stahl bzw. dem plasma-nitrierten Stahl. Die permanente Magnetisierung in dem Basisteil 8 wird durch einen Permanentmagneten 24 (Fig. 2, 3) bereitgestellt, der in einer Bohrung in dem Basisteil 8 so aufgenommen ist, dass der Permanentmagnet 24 nicht über die Auflagefläche 15 des Basisteils 8 vorsteht.

Alternativ oder ergänzend zu einer permanenten Magnetierung in dem Basisteil 8, insbesondere einem Permanentmagneten, kann vorgesehen sein, dass das Wechselteil 9 an einem dem Anlageabschnitt 11 gegenüberliegenden Endabschnitt 25 einen in Fig. 2 nicht dargestellten Halteabschnitt aufweist, der eine Endkante 26 des Basisteils 8 abschnittsweise übergreift. Der Halteabschnitt kann beispielsweise als abgewinkelte Lasche des Wechselteils 9 an dessen Endabschnitt 25 ausgebildet sein, oder als zusätzliches Teil, beispielsweise eine Anspritzung aus einem elastischen Kunststoff. Die abgewinkelte Lasche des Wechselteils 9 lässt sich beispielsweise bei der Herstellung des Wechselteils 9 als Frästeil herstellen, indem das Material im Bereich der Lasche gerade nicht abgetragen wird.

Die vorstehend beschriebene Spannvorrichtung 27 ist ausgebildet, um zwischen den jeweils zweiteilig ausgebildeten Spannbacken 4, 5 ein elektrisches, optisches oder elektro-optisches Kabel aufzunehmen und, bei Betätigen des Aktors 1, zwischen den Spannbacken 4,5 lösbar geklemmt zu halten. Für die abschnittsweise Aufnahme des Kabels erstreckt sich die Aufnahmekontur 6, 7 der jeweiligen Spannbacke 4, 5 in Längsrichtung des Kabels um ein Vielfaches des Durchmessers des Kabels. Insbesondere erstreckt sich die Aufnahmekontur 6, 7 der jeweiligen Spannbacke 4, 5 in Längsrichtung deutlich über den unmittelbar zwischen den Basisteilen 8, 8` der Spannbacken 4, 5 vorgesehen Zwischenbereich. Die Spannvorrichtung 27 ist Teil eines Werkstückträgers, der insbesondere für die Aufnahme eines Kabels ausgebildet ist, wobei der Werkstückträger je eine Spannvorrichtung 27 aufweist, um jedes der beiden Enden des Kabels aufzunehmen.

Alternativ hierzu könnte die beschriebene Spannvorrichtung 27 auch an einem Greifer, beispielsweise an einem Arm eines Roboters, angeordnet sein.

### BEZUGSZEICHENLISTE

- 1: Aktor
- 2: erste Aktorhälfte
- 3: Führung der ersten Aktorhälfte 2 im Aktorgehäuse
- 4: erste Spannbacke
- 5: zweite Spannbacke
- 6: Aufnahmekontur der ersten Spannbacke 4
- 7: Aufnahmekontur der zweiten Spannbacke 5
- 8: Basisteil der ersten Spannbacke 4
- 8`: Basisteil der zweiten Spannbacke 5
- 9: Wechselteil der ersten Spannbacke 4
- 9`: Wechselteil der zweiten Spannbacke 5
- 10: Auflageabschnitt des Wechselteils 9
- 11: Anlageabschnitt des Wechselteils 9
- 12: Anlagefläche des Anlageabschnitts 11
- 13: Anlagefläche des Basisteils 8
- 14: Auflagefläche des Auflageabschnitts 10 des Wechselteils 9
- 15: Auflagefläche des Basisteils 8
- 16: Wangenabschnitt des Wechselteils 9
- 17: Wangenabschnitt des Wechselteils 9
- 18: Seitenkante des Basisteils 8
- 19: Doppelpfeil
- 20: Pfeil
- 21: Hinterschneidung
- 22: Befestigungsabschnitt des Basisteils 8
- 23: Kante des Basisteils
- 24: Permanentmagnet
- 25: Endabschnitt des Wechselteils 9
- 26: Endkante des Basisteils 8
- 27: Spannvorrichtung

## Patentansprüche

1. Spannvorrichtung (27), insbesondere für einen Werkstückträger für ein Kabel, wobei die Spannvorrichtung (27) aufweist:
- einen betätigbaren Aktor (1) mit zwei Aktorhälften (2),
- eine erste Spannbacke (4), die an der ersten Aktorhälfte (2) angeordnet ist, und eine zweite Spannbacke (5), die an der zweiten Aktorhälfte angeordnet ist, wobei bei Betätigung des Aktors (1) das Kabel abschnittsweise zwischen einer Aufnahmekontur (6) der ersten Spannbacke (4) und einer Aufnahmekontur (7) der zweiten Spannbacke (5) lösbar eingespannt werden kann,
- wobei mindestens eine Spannbacke (4; 5) zweiteilig ausgebildet ist und ein an der Aktorhälfte (2) befestigtes Basisteil (8, 8') und ein an dem Basisteil (8, 8') angeordnetes Wechselteil (9, 9`) aufweist,
- wobei das Wechselteil (9, 9`) einen auf dem Basisteil (8, 8') aufliegenden Auflageabschnitt (10) mit einer Auflagefläche (14) und einen an dem Basisteil (8, 8') anliegenden Anlageabschnitt (11) aufweist,
- wobei an dem Anlageabschnitt (11) an der auf die andere Spannbacke (5) weisenden Außenseite die Aufnahmekontur (6) ausgebildet ist,
- wobei an dem Anlageabschnitt (11) an einer von der anderen Spannbacke (5) fort weisenden Innenseite eine Anlagefläche (12) ausgebildet ist, mit der der Anlageabschnitt (11) an einer Anlagefläche (13) des Basisteils (8, 8') anliegt ist, und
- wobei die Anlagefläche (12) des Anlageabschnitts (11) des Wechselteils (9) mit der auf dem Basisteil (8, 8') aufliegenden Auflagefläche (14) des Wechselteils (9) einen spitzen Winkel einschließt.

2. Spannvorrichtung nach Anspruch 1, wobei der spitze Winkel ca. 30° bis ca. 75°, insbesondere ca. 65°, beträgt.

3. Spannvorrichtung nach Anspruch 1 oder 2, wobei das Wechselteil (9, 9`) zwei gegenüberliegende Wangenabschnitte (16, 17) aufweist, wobei der jeweilige Wangenabschnitt (16, 17) nahe an einer Seitenkante (18) des Basisteils (8, 8') anliegt.

4. Spannvorrichtung nach einem der Ansprüche 1 bis 3, wobei das Wechselteil (9, 9') als einstückiges metallisches Formteil ausgebildet ist.

5. Spannvorrichtung nach einem der Ansprüche 1 bis 4, wobei das Wechselteil (9, 9') aus einem magnetisch leitfähigen Material ausgebildet ist, und wobei in dem Basisteil (8, 8') eine permanente Magnetisierung vorgesehen ist, deren magnetischer Kreis durch das magnetisch leitfähige Material des Wechselteils (9, 9`) geschlossen wird.

6. Spannvorrichtung nach einem der Ansprüche 1 bis 5, wobei das Wechselteil (9, 9') im Bereich des Übergangs von der Auflagefläche (14) des Auflageabschnitts (10) zu der Anlagefläche (12) des Anlageabschnitts (11) eine Hinterschneidung (21) aufweist, die sich im Wesentlichen parallel zu der Aufnahmekontur (6) erstreckt.

7. Spannvorrichtung nach einem der Ansprüche 1 bis 6, wobei das Wechselteil (9, 9') ohne weitere zusätzliche Befestigungsmittel an dem Basisteil (8, 8') im Bereich des Auflageabschnitts (10) aufliegend und im Bereich des Anlageabschnitts (11) anliegend angeordnet und gehalten ist.

8. Spannvorrichtung nach einem der Ansprüche 1 bis 7, wobei das Wechselteil (9, 9') an einem dem Anlageabschnitt (11) gegenüberliegenden Endabschnitt (25) einen Halteabschnitt aufweist, der eine Endkante (26) des Basisteils (8, 8') abschnittsweise übergreift.

9. Spannvorrichtung nach einem der Ansprüche 1 bis 8, wobei das Basisteil (8) einen Befestigungsabschnitt (22) zur Befestigung an der Aktorhälfte (2) aufweist, und wobei der Befestigungsabschnitt (22) außerhalb des von dem Wechselteil (9, 9`) abgedeckten Abschnitts des Basisteils (8, 8') angeordnet ist.

10. Spannvorrichtung nach einem der Ansprüche 1 bis 9, wobei jede der beiden Spannbacken (4, 5) zweiteilig mit jeweils einem Basisteil (8, 8') und jeweils einem Wechselteil (9, 9') ausgebildet ist, und wobei das Basisteil (8, 8') der jeweiligen Spannbacke (4, 5) nach einem der Ansprüche 1 bis 9 ausgebildet ist, und wobei Wechselteil (9, 9') der jeweiligen Spannbacke (4, 5) nach einem der Ansprüche 1 bis 9 ausgebildet ist.

11. Werkstückträger, ausgebildet für die geklemmte Aufnahme der beiden Kabelenden eines Kabels, umfassend eine Spannvorrichtung (27) nach einem der Ansprüche 1 bis 10, insbesondere jeweils eine Spannvorrichtung (27) nach einem der Ansprüche 1 bis 10 für jedes der beiden Kabelenden.
